(19) **Europäisches Patentamt**
**European Patent Office**
**Office européen des brevets**

(11) **EP 3 164 634 B1**

(12) **FASCICULE DE BREVET EUROPÉEN**

(45) Date de publication et mention
de la délivrance du brevet:
**26.03.2025 Bulletin 2025/13**

(21) Numéro de dépôt: **15735998.5**

(22) Date de dépôt: **29.06.2015**

(51) Classification Internationale des Brevets (IPC):
**F16L 33/207** [(2006.01)]

(52) Classification Coopérative des Brevets (CPC):
**F16L 33/2071**

(86) Numéro de dépôt international:
**PCT/FR2015/051754**

(87) Numéro de publication internationale:
**WO 2016/001550 (07.01.2016 Gazette 2016/01)**

(54) **CONNECTEUR FLUIDIQUE AVEC COLLIER À SERTIR PRÉ-POSITIONNÉ**

FLÜSSIGKEITSKUPPLUNG MIT VORPOSITIONIERTEM CRIMPBUND

FLUID CONNECTOR WITH PRE-POSITIONED CRIMPING COLLAR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.07.2014 FR 1456494**

(43) Date de publication de la demande:
**10.05.2017 Bulletin 2017/19**

(73) Titulaire: **Sartorius Stedim FMT
13400 Aubagne (FR)**

(72) Inventeurs:
• **BLAKE, Florian**
**F-13600 La Ciotat (FR)**
• **GIBELIN, Jérémy**
**83870 Signes (FR)**

(74) Mandataire: **Novagraaf International SA
Chemin de l'Echo 3
1213 Onex, Geneva (CH)**

(56) Documents cités:
DE-A1- 3 815 168     DE-U1- 202004 015 244
GB-A- 2 049 856      JP-A- H02 203 098
US-A- 4 453 746      US-A- 4 453 746

## Description

L'invention concerne un procédé pour fixer un tuyau à un connecteur fluidique, en particulier pour les connexions ou raccordements fluidiques permettant de raccorder un connecteur à une conduite souple, dans le domaine des applications biopharmaceutiques.

Plus précisément, on utilise, dans le domaine biopharmaceutique, des conduites ou tuyaux souples, et des récipients ou contenants, qui servent à transporter et contenir des substances biopharmaceutiques diverses, avec le plus souvent des précautions d'asepsie nécessaires.

Dans les applications biopharmaceutiques, de tels conduites ou tuyaux souples permettent la circulation, le passage, la communication d'un fluide, tel qu'un fluide biopharmaceutique et peuvent être raccordés soit à un tuyau souple similaire soit à un récipient ou un contenant, qui peut être rigide ou souple lui aussi, par l'intermédiaire d'un connecteur, usuellement rigide et par exemple réalisé en plastique et/ou en métal.

Un tel tuyau, habituellement de section circulaire, est réalisé typiquement en matière plastique telle que le silicone, les élastomères thermoplastiques (TPE), mais également le PVC, la liste n'étant pas limitative. Il présente une certaine tenue d'ensemble et, simultanément, à la fois une certaine flexibilité d'ensemble et une certaine flexibilité locale, ce qui permet, moyennant l'exercice d'une force suffisante, de déformer substantiellement radialement le tuyau, par exemple pour l'enfiler sur des portions d'un connecteur de diamètre supérieur à un diamètre du tuyau au repos.

Dans une réalisation typique, par exemple, le tuyau a un diamètre extérieur compris entre par exemple 6 millimètres et 40 millimètres, l'épaisseur dépendant du matériau, du diamètre et des applications.

Un tel connecteur, usuellement également de section circulaire, comporte un embout tubulaire terminé par une extrémité ouverte et sur lequel une extrémité avant ouverte du tuyau peut être enfilée.

Par ailleurs, le connecteur, et notamment l'embout tubulaire du connecteur, comporte habituellement, partant depuis l'extrémité ouverte du connecteur selon l'axe dudit connecteur, des projections radiales de retenue dénommées également cannelures, barbelures ou encore par le terme anglo-saxon « hose barb » suivies d'une zone de serrage, par exemple sensiblement cylindrique. Les projections radiales de retenue présentent un diamètre extérieur supérieur ou égal au diamètre intérieur du tuyau au repos. Elles déforment ainsi le tuyau souple et permettent d'assurer une étanchéité et une retenue minimale du tuyau souple par rapport au connecteur.

Dans l'art connu, pour fixer un tel tuyau souple à un tel connecteur, on procède de la façon suivante. Tout d'abord, on enfile l'extrémité avant ouverte du tuyau sur l'embout tubulaire du connecteur de sorte à ce que l'extrémité avant du tuyau entoure l'embout tubulaire du connecteur notamment à l'endroit des projections radiales de retenue ainsi que de la zone de serrage. Après quoi, on amène un collier de serrage depuis l'arrière du tuyau jusqu'à l'extrémité avant du tuyau et notamment jusqu'à la zone de serrage. Enfin, on procède au serrage du collier. Le collier serré exerce une pression radiale vers l'intérieur suffisante pour maintenir le tuyau souple sur l'embout de sorte à, d'une part assurer une bonne étanchéité du tuyau vis-à-vis de l'embout, et d'autre part éviter qu'une traction sur le tuyau ne conduise à un désengagement du tuyau de l'embout.

S'agissant de tels colliers de serrage, on peut utiliser par exemple un collier métallique qui se présente sous la forme d'un anneau préformé muni d'une ou deux oreilles faisant saillie vers l'extérieur relativement à la forme générale de l'anneau du collier, ce type de collier est parfois appelé collier Oetiker®. Après insertion du collier sur le tuyau à maintenir, on procède au moyen d'un outil au pincement de l'oreille (ou des oreilles) du collier ce qui provoque une déformation rémanente et ainsi un rétrécissement du diamètre principal de l'anneau et par conséquent serrage du collier sur le tuyau. Ce type de serrage par anneau métallique est particulièrement robuste et fiable.

Toutefois, pour certains types d'applications, la singularité de pression radiale au niveau de l'oreille (ou des oreilles) rend la pression de serrage non homogène sur la circonférence. Et dans ce cas on préfère utiliser un collier de type 'Bague à rétreindre' qui se présente comme un anneau cylindrique de révolution que l'on peut compresser radialement vers l'intérieur pour faire diminuer son diamètre de quelques pour cents, en pratique pour fixer l'ordre de grandeur entre 2% et 30%, préférentiellement entre 2% et 15%, la réduction de diamètre se produisant de façon homogène sur tout le tour de la circonférence. Ainsi aucune singularité de pression radiale n'est créée, ce qui améliore la fonction serrage et étanchéité. L'homogénéité du serrage obtenu est d'autant meilleure que la réduction de diamètre est faible. Aussi l'esthétique du collier est d'autant meilleure que la réduction de diamètre est faible, car cela réduit les vaguelettes produites sur la surface de la bague sertie. Dans l'art connu, pour amener de tels colliers depuis l'arrière du tuyau jusqu'à l'extrémité avant du tuyau et notamment jusqu'à la zone de superposition entre le tuyau et le connecteur il est donc nécessaire de faire passer le collier au-dessus des projections radiales de retenue, ce qui implique de choisir un collier présentant un diamètre intérieur assez grand pour ce faire. Cette contrainte est contradictoire, dans le cas des bagues à rétreindre, comme indiqué plus haut avec une faible réduction de diamètre, facteur de garantie d'homogénéité.

De fait, dans l'art connu, avant le sertissage du collier, il existe alors un jeu relativement important entre le diamètre intérieur du collier et le diamètre extérieur du tuyau à l'endroit de la zone de serrage. L'annulation de ce jeu et le serrage effectif du collier peuvent entraîner des rides sur le tuyau voire un endommagement plus sérieux, ce qui peut entraîner une fuite ou une perte de stérilisation préjudiciable à l'application biopharmaceutique. Un procédé selon l'état de la technique est par exemple décrit dans le document DE3815168.

Il existe par conséquent le besoin de proposer une amélioration destinée à pallier, au moins en partie, l'inconvénient précité de l'art antérieur connu.

Pour cela, il est proposé un procédé pour fixer de manière étanche un tuyau souple à un connecteur grâce à un collier à sertir, ce procédé étant tel que défini dans la revendication 1.

Moyennant quoi, l'assemblage et le sertissage sont réalisées simplement et de façon fiable, soit par des moyens automatisés soit par des moyens manuels.

De préférence, on enfile le collier autour du connecteur avant d'enfiler l'extrémité avant du tuyau sur l'embout tubulaire.

L'espace d'accueil temporaire ainsi défini permet d'héberger au moins partiellement le collier avant l'insertion du tuyau ce qui permet de choisir un diamètre D0 au plus proche de D1, même si les projections de retenue sont relativement épaisses.

Selon une réalisation, on enfile le collier autour du connecteur au moyen d'une mâchoire,

- la mâchoire maintient le collier sensiblement coaxial avec l'espace d'accueil temporaire du connecteur pendant que l'on enfile l'extrémité avant du tuyau sur l'embout tubulaire, et
- on déplace le collier ou le connecteur de manière à positionner le collier autour d'une portion au moins de l'extrémité avant du tuyau et sensiblement en regard de la zone de serrage du connecteur au moyen de la mâchoire.

Selon une réalisation, le collier est un collier métallique à rétreint, notamment un collier sans oreille.

Selon une réalisation, le premier diamètre extérieur **D1** et le diamètre intérieur **D0** peuvent être sensiblement proches, et de préférence un écart entre le premier diamètre extérieur **D1** et le diamètre intérieur **D0** est inférieur à 15% du diamètre intérieur **D0,** et de préférence inférieur à 10% du diamètre intérieur **D0,** voire encore plus préférentiellement inférieur à 5% du diamètre intérieur **D0**.

D0 et D1 vérifient donc la relation

$$< \frac{D0}{D1} < 1,15$$ , voire $$1 < \frac{D0}{D1} < 1,1$$ voire même

$$1 < \frac{D0}{D1} < 1,05$$ , moyennant quoi la diminution de diamètre lors de l'opération de sertissage est peu importante et on réduit ainsi les vagues ou les plis sur la surface de la bague et aussi du tuyau.

Selon une réalisation, on prévoit une collerette qui sépare l'espace d'accueil temporaire du corps de connecteur, la collerette présentant un quatrième diamètre extérieur **D4** supérieur au diamètre intérieur **D0** ; de sorte à limiter ainsi la course du collier vers l'avant par rapport au connecteur.

Selon une réalisation, l'espace d'accueil temporaire présente une longueur axiale **L1** supérieure ou égale à une longueur axiale **L0** du collier ; de sorte à pouvoir accueillir complètement le collier.

Selon une réalisation alternative à la précédente, l'espace d'accueil temporaire présente une longueur axiale L1 inférieure à une longueur axiale **L0** du collier; moyennant quoi, l'espace d'accueil temporaire permet d'héberger le collier dans une position en porte-à-faux, et l'extrémité avant du tube peut être glissée sous la partie en porte-à-faux du collier pendant l'opération d'insertion du tube. La compacité axiale du connecteur peut ainsi être améliorée.

On peut choisir par exemple L1 = 90% de L0, ou L1 = 75% de L0 ou encore L1 = 50% de L0.

Selon une réalisation, l'espace d'accueil temporaire est séparé de la zone de serrage par une collerette auxiliaire présentant un cinquième diamètre extérieur **D5** supérieur à l'encombrement radial maximal **D3** de l'espace d'accueil temporaire et inférieur au diamètre intérieur **D0** ; moyennant quoi, il est formé un piège à gravité qui permet un maintien axial du collier dans la gorge annulaire sous l'effet de la gravité.

Selon une réalisation, l'encombrement radial maximal **D3** de l'espace d'accueil temporaire est supérieur ou égal au premier diamètre extérieur **D1;** on forme ainsi une butée naturelle, épaisse et robuste qui limite l'insertion du tube souple.

Selon une réalisation, l'espace d'accueil temporaire peut comprendre un ou plusieurs godrons aptes à être en contact avec le collier ; on procure ainsi un maintien par friction du collier sur l'espace d'accueil.

Selon une réalisation, les godrons définissent un encombrement radial maximal **D3** sensiblement égal au diamètre intérieur **D0** ; ce qui permet de positionner aisément le collier dans l'espace d'accueil, et de déplacer ensuite vers la zone de serrage.

Selon une réalisation, la zone de serrage présente une longueur axiale **L2** supérieure ou égale à une longueur axiale **L0** du collier et est terminée à une première extrémité axiale par les projections radiales de retenue et à une deuxième extrémité axiale par un épaulement axial de butée du tuyau. Moyennant quoi, un sertissage de qualité sur une longueur suffisante permet de garantir une bonne étanchéité.

Selon une réalisation, le collier est préférentiellement métallique et le collier est soit un collier à rétreint soit un collier à oreille. Ceci forme une solution robuste et durable.

On décrit maintenant brièvement les figures des dessins.

La figure 1 est une vue en coupe axiale d'un ensemble de raccordement fluidique au cours de la mise en œuvre d'un procédé selon l'invention pour fixer de manière étanche un tuyau souple à un connecteur grâce à un collier, dans lequel l'extrémité avant du tuyau est enfilée sur l'embout tubulaire, de sorte à entourer circonférentiellement les projections radiales de retenue et une portion au moins de la zone de serrage, et le collier de serrage entoure circonférentiellement l'espace d'accueil temporaire.

La figure 2 est une vue en coupe axiale de l'ensemble de raccordement fluidique de la figure 1, dans lequel le collier est placé autour de l'extrémité avant du tuyau et sensiblement en regard de la zone de serrage du connecteur.

La figure 3 est une vue en coupe axiale de l'ensemble de raccordement fluidique de la figure 1, dans lequel le collier est serti de sorte à fixer l'extrémité avant ouverte du tuyau souple au connecteur.

La figure 4 est vue en coupe axiale de l'ensemble de raccordement fluidique de la figure 1 au cours de la mise en œuvre d'une variante d'un procédé selon l'invention pour fixer de manière étanche un tuyau souple à un connecteur grâce à un collier, dans lequel on positionne le collier autour du connecteur au moyen d'une mâchoire de machine d'assemblage.

La figure 5 est vue en coupe axiale de l'ensemble de raccordement fluidique de la figure 4, dans lequel on déplace le collier ou le connecteur avec son tube inséré de manière à placer le collier autour d'une portion au moins de l'extrémité avant du tuyau et sensiblement en regard de la zone de serrage du connecteur au moyen de la mâchoire, puis on sertit le collier (en pointillés).

La figure 6 est une vue en coupe axiale d'un ensemble de raccordement fluidique selon un deuxième mode de réalisation, au cours de la mise en œuvre d'un procédé selon l'invention pour fixer de manière étanche un tuyau souple à un connecteur grâce à un collier.

Les figures 7, 8 et 9 sont des vues en coupe axiale d'un ensemble de raccordement fluidique selon un troisième mode de réalisation, au cours de la mise en œuvre d'un procédé selon l'invention pour fixer de manière étanche un tuyau souple à un connecteur grâce à un collier.

La figure 10 est vue en coupe axiale analogue à la figure 1, avec un espace d'accueil de longueur axiale réduite.

Ci-après un exposé détaillé de plusieurs modes de réalisation de l'invention assorti d'exemples et de référence aux dessins.

Dans l'exemple illustré, il s'agit d'un ensemble de raccordement fluidique **100** comportant un connecteur **1** auquel est raccordé un tuyau souple **2** de façon étanche aux fluides. Le connecteur 1 est par exemple relié lui-même à un récipient de produit biopharmaceutique ou un autre tuyau.

Le tuyau souple 2 peut être défini généralement comme une paroi **20** délimitant un espace fluidique **21.** Le tuyau souple 2 comporte une extrémité avant ouverte 2a et s'étend à partir de l'extrémité avant **2a** dans une direction arrière par une section sensiblement cylindrique et notamment cylindrique de révolution. Le tuyau souple 2 peut comporter une extrémité arrière (non-représentée), par exemple ouverte et reliée à un récipient de produit biopharmaceutique ou un autre connecteur.

Le connecteur 1 comprend un embout tubulaire **3** terminé par une extrémité ouverte **3a** ainsi qu'un corps de connecteur **10.** L'embout tubulaire 3 est par exemple de révolution autour d'un axe **A-A.** Le corps de connecteur 10 peut également être sensiblement de révolution autour de l'axe A-A. Le corps de connecteur 10 peut ainsi être disposé à une deuxième extrémité **1a** du connecteur 1, par exemple une extrémité 1a opposée à l'extrémité ouverte 3a. La deuxième extrémité 1a du connecteur 1 est par exemple relié à un récipient de produit biopharmaceutique ou un tuyau (non-représentés) pour permettre un transfert de fluide biopharmaceutique avec le tuyau souple 2.

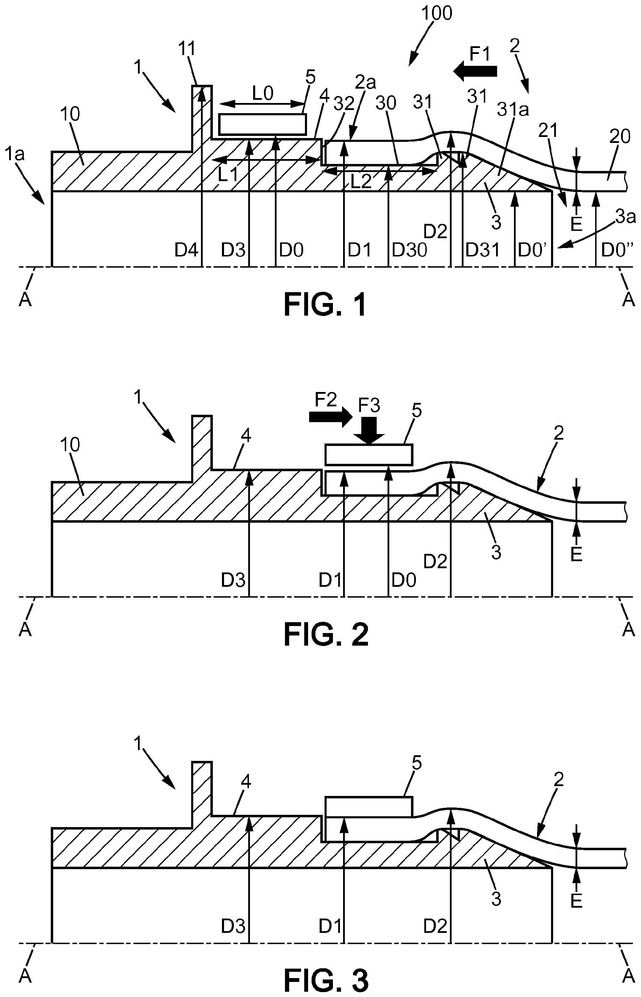

Comme illustré sur la figure 1 par exemple, l'embout tubulaire 3 est apte à recevoir, et être fixé à, l'extrémité avant 2a du tuyau 2.

L'embout tubulaire 3 comporte à cette fin des projections radiales de retenue **31** du tuyau 2.

Les projections radiales de retenue **31,** également appelées cannelures, barbelures ou encore par le terme anglo-saxon « hose barb », ont par exemple une forme générale de tronc de cône percé d'une ouverture centrale, la forme de tronc de cône présentant notamment un plus petit diamètre orienté vers l'extrémité ouverte 3a de l'embout tubulaire 3. De façon avantageuse, une projection radiale de retenue extrémale **31a** peut être terminée par l'extrémité ouverte 3a de l'embout tubulaire 3, de sorte que la forme de tronc de cône de la projection radiale de retenue extrémale 31a constitue une rampe radiale progressive à partir de l'extrémité ouverte 3a.

L'embout tubulaire 3 comporte également une zone de serrage **30** du tuyau 2. Cette zone de serrage 30 se présente notamment comme un cylindre sensiblement lisse. La zone de serrage 30 est par exemple sensiblement coaxiale avec l'embout tubulaire 3 et le cas échéant le corps de connecteur 10. La zone de serrage 30 présente habituellement un diamètre extérieur maximal **D30** inférieur au diamètre extérieur maximal **D31** des projections radiales de retenue 31.

La zone de serrage 30 est terminée à une première extrémité axiale par les projections radiales de retenue 31 et à une deuxième extrémité axiale par un épaulement axial 32 de butée du tuyau 2. L'épaulement axial 32 est ainsi par exemple disposé à l'opposé des projections radiales de retenue 31 par rapport à l'axe A-A. L'épaulement axial 32 permet de limiter l'avancée du tuyau souple sur l'embout tubulaire 3. L'épaulement axial 32 termine par exemple l'embout tubulaire 3 sur son extrémité axiale opposée à l'extrémité ouverte 3a.

Ainsi, dans un ordre séquentiel selon l'axe **A-A** partant de l'extrémité ouverte 3a, l'embout tubulaire 3 peut comporter, tout d'abord, les projections radiales de retenue 31 puis la zone de serrage 30 et enfin l'épaulement axial 32. L'embout tubulaire 3 peut cependant comporter des éléments additionnels, en début, en fin ou intercalés entre les trois éléments mentionnés ci-dessus.

Dans l'exemple de la figure 1, l'extrémité avant 2a du tuyau 2 est montée (flèche F1) sur l'embout tubulaire 3 de sorte à entourer circonférentiellement les projections radiales de retenue 31 et une portion de la zone de serrage 30, sensiblement proche de la totalité de la zone de serrage 30. L'extrémité avant 2a du tuyau 2 vient ainsi en proximité de l'épaulement axial 32.

On peut remarquer que le diamètre intérieur **D0'** de l'embout tubulaire 3 peut avantageusement être sensiblement voisin du diamètre intérieur **D0"** du tuyau souple 2 au repos. Lorsque l'on enfile le tuyau souple 2 sur l'embout tubulaire 3, l'ouverture extrémale 2b de l'extrémité avant 2a du tuyau 2 se déforme radialement vers l'extérieur grâce à la rampe radiale progressive de la projection radiale de retenue extrémale 31a, reste déformée vers l'extérieur le long des projections radiales de retenue 31, puis retrouve un diamètre plus étroit au niveau de la zone de serrage 30.

Dans cette configuration montée sur l'embout tubulaire 3, l'extrémité avant 2a du tuyau 2 présente alors un premier diamètre extérieur **D1** à l'endroit de la zone de serrage 30 et un deuxième diamètre extérieur **D2** à l'endroit des projections radiales de retenue 31. Le premier diamètre extérieur **D1** peut notamment être inférieur au deuxième diamètre extérieur **D2,** comme illustré sur la figure 1.

L'ensemble de raccordement fluidique 100 comprend par ailleurs un collier **5** à sertir pour fixer l'extrémité avant 2a du tuyau souple 2 au connecteur 1. Le collier permet d'exercer une pression radiale sur l'extrémité du tuyau qui entoure l'embout tubulaire. Cette pression radiale a deux objectifs : le premier est d'assurer une étanchéité suffisamment performante entre le tuyau 2 et l'embout tubulaire 3, et le deuxième consiste à maintenir mécaniquement le tuyau autour de l'embout pour éviter qu'une traction exercée sur le tuyau ne conduise à désengager le tuyau de l'embout tubulaire, le deuxième objectif étant principalement atteint grâce à la condition géométrique **D31>D30.**

Le collier **5,** lorsqu'il entoure circonférentiellement l'axe A-A présente une longueur axiale **L0.** Par ailleurs, le collier 5 au repos avant sertissage présente un diamètre intérieur **D0.**

Dans toute la présente description, on entend par « longueur axiale » d'un élément, un encombrement total dudit élément selon l'axe A-A.

Le collier 5 est en particulier adapté pour être serré autour de l'extrémité avant 2a du tuyau 2 à l'endroit où ladite extrémité avant 2 entoure circonférentiellement la zone de serrage 30.

Ainsi, pour permettre un serrage convenable du collier autour du tuyau souple 2, la zone de serrage 30 présente avantageusement une longueur axiale **L2** supérieure ou égale à la longueur axiale **L0** du collier 5. De cette façon, elle présente une surface de serrage optimale pour un collier donné.

Selon les modes de réalisation envisagés, le collier 5, de préférence métallique, peut être un collier à rétreint ou un collier à oreille comme détaillé ci-après en relation avec les différents modes de réalisation de l'invention présentés.

Le connecteur 1 comprend également un **espace d'accueil temporaire 4** qui va maintenant être détaillé plus avant.

L'espace d'accueil temporaire **4** est par exemple arrangé entre l'embout tubulaire 3 et le corps de connecteur 10, notamment entre l'épaulement axial **32** de l'embout tubulaire 3 et le corps de connecteur 10.

Dans l'exemple des figures, l'espace d'accueil temporaire **4** se présente comme un cylindre sensiblement lisse avec une longueur axiale **L1** supérieure ou égale à la longueur axiale **L0** du collier 5. L'espace d'accueil temporaire 4 présente un encombrement radial maximal **D3** inférieur ou égal au diamètre intérieur **D0.** De cette façon, l'espace d'accueil temporaire 4 peut accueillir complètement le collier 5.

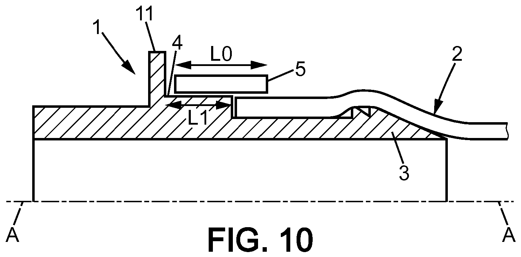

Dans une variante de réalisation représentée à la figure 10, l'espace d'accueil temporaire 4 peut présenter une longueur axiale **L1** inférieure à la longueur axiale **L0** du collier 5. Dans cette variante, l'espace d'accueil temporaire 4 présente avantageusement un encombrement radial maximal **D3** supérieur ou égal au premier diamètre extérieur **D1** du tuyau 2 à l'endroit de la zone de serrage 30. De cette façon, le collier 5 peut être placé en porte-à-faux sur l'espace d'accueil temporaire 4 tandis que le tuyau 2 est inséré sur l'embout tubulaire 3, et glissé sous la partie en porte-à-faux du collier 5 en attente.

Par ailleurs, le premier diamètre extérieur **D1** du tuyau 2 est inférieur ou égal au diamètre intérieur **D0** et le deuxième diamètre extérieur **D2** du tuyau 2 est supérieur ou égal au diamètre intérieur **D0.**

De cette façon, l'espace d'accueil temporaire 4 permet d'héberger temporairement le collier 5 pendant la mise en œuvre du procédé de serrage du tuyau souple au connecteur 1 et notamment avant l'insertion du tuyau 2 sur l'embout 3 comme cela sera détaillé ci-après. Ceci permet avantageusement de choisir un diamètre **D0** du collier 5 au repos avant sertissage au plus proche du premier diamètre extérieur **D1** du tuyau 2 à l'endroit de la zone de serrage 30, et ceci même si les projections de retenue 31 sont relativement épaisses.

Ainsi par exemple on peut choisir le premier diamètre extérieur **D1** et le diamètre intérieur **D0** sensiblement proches. De préférence, un écart entre le premier diamètre extérieur **D1** et le diamètre intérieur **D0** peut être inférieur à cinq pourcents du diamètre intérieur **D0,** voir inférieur à 3 pourcents. De cette façon, la diminution de diamètre du collier lors de l'opération de serrage est peu importante et le risque de provoquer des vagues ou des plis sur la surface du tuyau au cours du serrage du collier est notablement réduit.

Par ailleurs, comme cela est visible sur la figure 1, le connecteur 1 peut comporter une collerette de corps de connecteur **11** séparant l'espace d'accueil temporaire 4 du corps de connecteur 10. La collerette de corps de connecteur 11 peut notamment présenter un quatrième diamètre extérieur **D4** supérieur au diamètre intérieur **D0** du collier 5. De cette façon, il est possible de limiter la course du collier 5 vers l'avant par rapport au connecteur 1 selon l'axe A-A.

Dans un premier mode de réalisation de l'ensemble de raccordement fluidique illustré sur les figures 1 à 5, l'encombrement radial maximal **D3** de l'espace d'accueil temporaire 4 est supérieur ou égal au premier diamètre extérieur **D1**. Le collier 5 peut alors être disposé temporairement sur l'espace d'accueil temporaire 4 pendant l'insertion du tuyau 2. Puis le collier est amené (flèche F2) autour de l'extrémité avant 2a du tuyau 2 à l'endroit de la zone de serrage 30 de façon aisée par une simple translation sans avoir besoin de centrer axialement le collier 5 sur le connecteur **1**. Puis le collier 5 est pressé vers l'intérieur par sertissage (flèche F3).

On remarque que pendant que le collier **5** est en attente sur l'espace d'accueil temporaire **4,** le collier 5 n'est pas situé dans la zone radiale extérieure de l'embout **3,** et l'extrémité avant du tuyau souple peut être poussée et guidée par les doigts d'un opérateur ou un préhenseur d'un manipulateur, sans que le collier ne procure de gêne, car il se situe axialement au-delà de l'épaulement axial d'arrêt **32** pour l'insertion du tuyau.

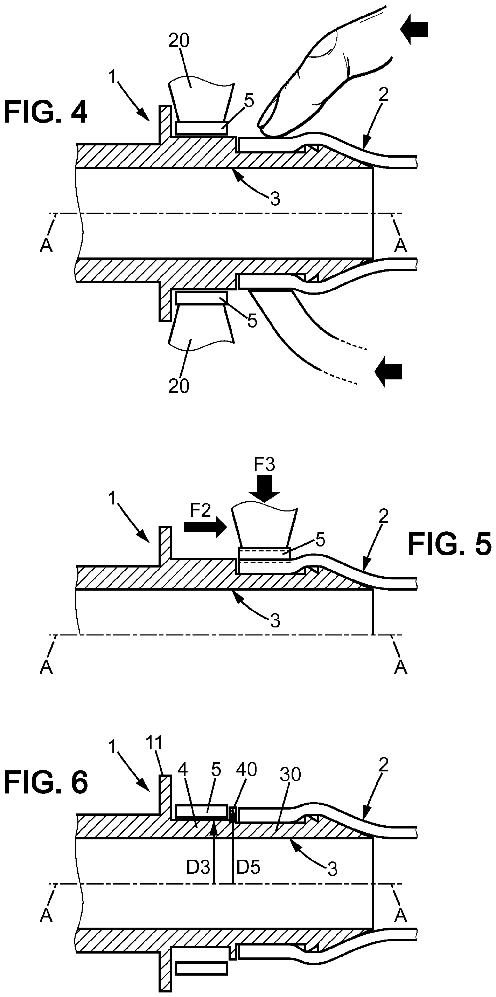

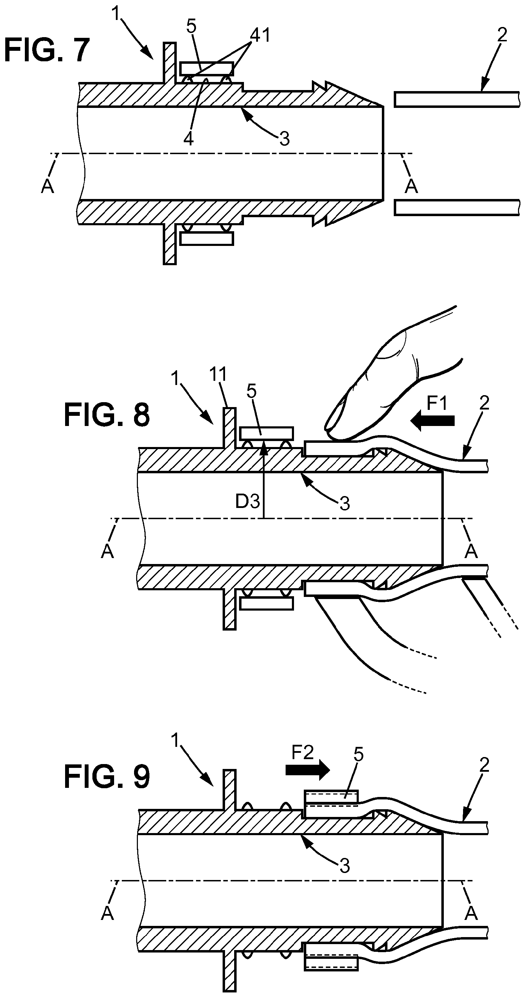

Dans un deuxième et un troisième mode de réalisation, illustrés respectivement sur la figure 6 et sur les figures 7 à 9, l'encombrement radial maximal **D3** de l'espace d'accueil temporaire 4 est inférieur ou égal au premier diamètre extérieur **D1**. De cette façon, il est possible de retenir temporairement le collier 5 sur l'espace d'accueil temporaire 4 notamment de la façon qui va maintenant être détaillée.

Ainsi, dans le deuxième mode de réalisation illustré sur la figure 6, l'espace d'accueil temporaire 4 est séparé de la zone de serrage 30 par une collerette auxiliaire **40** présentant un cinquième diamètre extérieur **D5** supérieur à l'encombrement radial maximal **D3** de l'espace d'accueil temporaire. Par ailleurs, le cinquième diamètre extérieur **D5** est inférieur au diamètre intérieur **D0** du collier 5.

La collerette auxiliaire 40, combinée le cas échéant avec la collerette de corps de connecteur 11 séparant l'espace d'accueil temporaire 4 du corps de connecteur 10, permet un maintien axial du collier 5 dans l'espace d'accueil temporaire 4. En effet, l'ensemble constitué par la collerette auxiliaire 40, la collerette de corps de connecteur 11 et l'espace d'accueil temporaire 4 forme une gorge annulaire dans laquelle le collier 5 peut être retenu sous l'effet de la gravité comme illustré sur la figure 6.

Dans le troisième mode de réalisation illustré sur les figures 7 à 9, l'espace d'accueil temporaire 4 comprend en outre des godrons **41**. Les godrons sont aptes à être en contact avec le collier 5 et permettent de maintenir le collier 5 sensiblement coaxial avec le connecteur 1.

Ainsi, les godrons 41 définissent un encombrement radial maximal **D3** qui est sensiblement égal au diamètre intérieur **D0** du collier 5.

L'encombrement radial maximal **D3** est par ailleurs avantageusement supérieur ou égal au premier diamètre extérieur **D1.** Le collier 5 peut alors être disposé temporairement sur les godrons 41 de l'espace d'accueil temporaire 4 et amené autour de l'extrémité avant 2a du tuyau 2 à l'endroit de la zone de serrage 30 de façon aisée par une simple translation sans avoir besoin de centrer axialement le collier 5 sur le connecteur 1.

Dans une variante de réalisation non illustrée, l'espace d'accueil temporaire 4 peut être de section non-circulaire, notamment de section polygonale, par exemple hexagonale. De cette façon, l'espace d'accueil temporaire 4 peut présenter des fonctions additionnelles, par exemple permettant une préhension par une mâchoire d'un outil pour permettre le vissage du connecteur sur un support. L'espace d'accueil temporaire 4 peut aussi être formé par trois (ou) projections radiales dont l'extrémité libre s'inscrit dans un diamètre de dimension D3.

Un procédé selon l'invention permettant de fixer de manière étanche un tuyau souple 2 à un connecteur 1 grâce à un collier 5 de serrage peut ainsi être mis en œuvre par exemple de la façon suivante.

Tout d'abord, on enfile le collier 5 autour du connecteur 1 par l'embout tubulaire 3 jusqu'à ce que le collier entoure circonférentiellement l'espace d'accueil temporaire 4. Le résultat de cette étape est par exemple illustré figure 7 dans le cas du troisième mode de réalisation.

Puis, on enfile l'extrémité avant 2a du tuyau 2 sur l'embout tubulaire 3 du connecteur 1 jusqu'à ce que ladite extrémité avant entoure circonférentiellement les projections radiales de retenue 31 et une portion au moins de la zone de serrage 30. On obtient alors la configuration des figures 1, 4, 6 et 8.

Là aussi, on remarque que pendant que le collier 5 est en attente sur l'espace d'accueil temporaire 4, le collier 5 n'est pas situé dans la zone radiale extérieure de l'embout 3, et l'extrémité avant du tuyau souple peut être poussée (flèche F1) et guidée par les doigts d'un opérateur ou un préhenseur d'un manipulateur, sans que le collier ne procure de gêne, car il se situe axialement au-delà de l'épaulement axial d'arrêt 32 pour l'insertion du tuyau. En d'autres termes, le collier 5 ne couvre pas radialement l'espace 30 prévu pour recevoir l'extrémité du tuyau.

Comme mentionné ci-avant, l'extrémité avant 2a du tuyau présente alors un premier diamètre extérieur **D1** à l'endroit de la zone de serrage 30 et un deuxième diamètre extérieur **D2** à l'endroit des projections radiales de retenue 31.

De manière avantageuse, le premier diamètre extérieur **D1** est inférieur au deuxième diamètre extérieur **D2,** de sorte à garantir une retenue minimal du tuyau sur le connecteur.

En outre, dans cette configuration, le premier diamètre extérieur **D1** et l'encombrement radial maximal **D3** sont avantageusement inférieurs ou égaux au diamètre intérieur **D0**, et le deuxième diamètre extérieur **D2** est avantageusement supérieur ou égal au diamètre intérieur **D0**. De cette façon, le collier présente un diamètre proche du premier diamètre du tuyau et peut néanmoins être hébergé sur l'espace d'accueil temporaire. Le procédé de serrage est ainsi simplifié et présente des risques faibles d'endommagement du tuyau au cours du serrage du collier.

Dans une étape ultérieure, on déplace le collier 5 (flèche F2) vers l'extrémité ouverte 3a de l'embout tubulaire 3 pour le placer autour d'une portion au moins de l'extrémité avant 2a du tuyau et sensiblement en regard de la zone de serrage 30 du connecteur comme illustré sur les figures 2, 5 et 9.

En alternative, le collier 5 le peut être maintenu à une position fixe et on déplace alors le connecteur 1 muni de son tube souple 2 inséré.

Enfin, on sertit le collier 5 (flèche F3) pour fixer extrémité avant ouverte 2a du tuyau souple 2 au connecteur 1 comme illustré sur les figures 3 ainsi qu'en pointillés sur les figures 5 et 9. On peut notamment sertir le collier 5 par une action manuelle (pince) ou par un moyen automatisé approprié.

En particulier, dans le procédé selon l'invention on peut enfiler le collier 5 autour du connecteur 1 avant d'enfiler l'extrémité avant 2a du tuyau sur l'embout tubulaire 3. Ce mode de réalisation permet d'éviter d'amener le collier depuis l'arrière du tuyau 2.

Dans un mode de réalisation du procédé illustré sur les figures 4 et 5, on peut utiliser une machine de montage munie d'une mâchoire **50** comportant des doigts de préhension pour mettre en œuvre le procédé de serrage de la façon suivante.

On saisit le collier 5 à l'aide de la mâchoire 50. On peut également saisir une portion du connecteur 1, par exemple le corps du connecteur 10 au moyen d'une deuxième mâchoire de la machine de montage non illustrée.

Puis, on enfile le collier 5 autour du connecteur 10 au moyen de la mâchoire 50.

La mâchoire 50 maintient alors le collier sensiblement coaxial avec l'espace d'accueil temporaire 4 du connecteur pendant que l'on enfile l'extrémité avant 2 du tuyau sur l'embout tubulaire 3.

Enfin on déplace le collier pour placer le collier autour d'une portion au moins de l'extrémité avant 2a du tuyau et sensiblement en regard de la zone de serrage 30 du connecteur au moyen de la mâchoire 50. Bien entendu, on peut aussi maintenir le collier 5 à une position fixe et déplacer le connecteur muni de son tube souple déjà inséré.

Selon le type de collier choisi, on peut procéder au serrage du collier par écrasement d'au moins une oreille du collier dans le cas d'un collier à oreille, ou par mise en tension du collier dans le cas d'un collier à rétreint ou « rétreint serti », c'est-à-dire une contraction radiale dirigée vers l'intérieur.

Dans ce dernier mode de réalisation du procédé, le collier 5 peut être un collier à rétreint, et notamment un collier sans oreille.

Le collier de serrage peut toutefois également être un collier de type métallique avec une ou plusieurs oreilles prévue(s) pour le serrage. La ou les oreille(s) de serrage est(sont) alors de préférence positionnée(s) angulairement à distance de chacune des doigts de préhension de la mâchoire 50.

On utilise ensuite une pince pour venir écraser la forme en oreille de manière à diminuer le diamètre de l'anneau formé par le collier 5 de serrage. De ce fait, le collier 5 de serrage a alors un diamètre plus petit que celui de la surface extérieure du tuyau 2 souple au repos, il exerce donc une pression radiale dirigée vers l'intérieur.

Il faut noter qu'il est possible d'utiliser plusieurs colliers 5 côte à côte pour la fonction de serrage.

De même on note qu'on peut choisir par exemple pour L1 = 90% de L0, ou L1 = 75% de L0 ou encore L1=2/3 de L0 comme illustré à la figure 10, ou encore L1 = 50% de L0.

**Revendications**

**1.** Procédé pour fixer de manière étanche un tuyau souple (2) à un connecteur (1) grâce à un collier à sertir (5), dans lequel :

- on dispose

    a. d'un tuyau (2) souple avec une extrémité avant ouverte (2a),
    b. d'un connecteur (1) comportant

        i. un corps de connecteur (10),
        ii. un embout tubulaire (3) apte à recevoir l'extrémité avant du tuyau, l'embout tubulaire comportant des projections radiales de retenue (31) du tuyau ainsi qu'une zone de serrage (30) du tuyau, et
        iii. un espace d'accueil temporaire (4), interposé axialement entre l'embout tubulaire (3) et le corps de connecteur (10) et présentant un encombrement radial maximal de diamètre D3, l'espace d'accueil temporaire (4) et la zone de serrage (30) étant séparées l'une de l'autre sur le connecteur (1), et

c. d'un collier (5) à sertir pour fixer l'extrémité avant du tuyau souple au connecteur, le collier au repos avant sertissage présentant un diamètre intérieur D0,

- on enfile le collier (5) autour du connecteur (1) par l'embout tubulaire (3) jusqu'à ce que le collier entoure circonférentiellement au moins partiellement l'espace d'accueil temporaire (4),
- on enfile l'extrémité avant (2a) du tuyau autour de l'embout tubulaire (3) du connecteur (1) jusqu'à ce que ladite extrémité avant (2) entoure circonférentiellement les projections radiales de retenue (31) et une portion au moins de la zone de serrage (30), de sorte qu'avec le collier (5) à sertir entourant circonférentiellement l'espace d'accueil temporaire (4), l'extrémité avant du tuyau présente un premier diamètre extérieur D1 à l'endroit de la zone de serrage (30) et un deuxième diamètre extérieur D2 à l'endroit des projections radiales de retenue (31), le premier diamètre extérieur D1 étant inférieur au deuxième diamètre extérieur D2, le premier diamètre extérieur D1 et le diamètre de l'encombrement radial maximal D3 étant inférieurs ou égaux au diamètre intérieur D0, et le deuxième diamètre extérieur D2 étant supérieur ou égal au diamètre intérieur D0,
- on déplace ensuite le collier ou le connecteur de manière à quitter l'espace d'accueil temporaire (4) pour ce qui concerne le collier (5) et positionner le collier (5) à sertir autour d'une portion au moins de l'extrémité avant (2a) du tuyau et sensiblement en regard de la zone de serrage (30) du connecteur, et
- on sertit le collier (5) pour fixer l'extrémité avant ouverte (2a) du tuyau souple (2) au connecteur (1),

sachant que l'espace d'accueil temporaire (4) est séparé de la zone de serrage (30) par un moyen séparateur choisi parmi un épaulement axial (32) de butée du tuyau ou une collerette (40).

**2.** Procédé selon la revendication 1, dans lequel

- on enfile le collier (5) autour du connecteur (10) au moyen d'une mâchoire,
- la mâchoire maintient le collier sensiblement coaxial avec l'espace d'accueil temporaire (4) du connecteur pendant que l'on enfile l'extrémité avant (2) du tuyau sur l'embout tubulaire (3), et
- on déplace le collier ou le connecteur de manière à positionner le collier autour d'une portion au moins de l'extrémité avant (2a) du tuyau et sensiblement en regard de la zone de serrage (30) du connecteur au moyen de la mâchoire.

**3.** Procédé selon la revendication 2, dans lequel le collier (5) est un collier métallique à rétreint, notamment un collier sans oreille.

**Patentansprüche**

**1.** Verfahren zum dichten Befestigen eines Schlauchs (2) an einem Verbinder (1) mit Hilfe eines Crimpbunds (5), wobei:

- bereitgestellt wird

a. ein Schlauch (2) mit einem offenen vorderen Ende (2a),
b. ein Verbinder (1), der aufweist

i. einen Verbinderkörper (10),
ii. einen rohrförmigen Ansatz (3), der imstande ist, das vordere Ende des Schlauchs aufzunehmen, wobei der rohrförmige Ansatz radiale Haltevorsprünge (31) für den Schlauch sowie einen Klemmbereich (30) für den Schlauch aufweist, und
iii. einen temporären Aufnahmeraum (4), der axial zwischen dem rohrförmigen Ansatz (3) und dem Verbinderkörper (10) zwischengestellt ist und einen maximalen radialen Platzbedarf mit dem Durchmesser D3 aufweist, wobei der temporäre Aufnahmeraum (4) und der Klemmbereich (30) auf dem Verbinder (1) voneinander getrennt sind, und

c. einen Crimpbund (5) zur Befestigung des vorderen Endes des Schlauchs am Verbinder, wobei der Bund im Ruhezustand vor dem Crimpen einen Innendurchmesser D0 aufweist,

- der Bund (5) durch den rohrförmigen Ansatz (3) um den Verbinder (1) geführt wird, bis die Bund den temporären Aufnahmeraum (4) umfangmäßig zumindest teilweise umgibt,
- das vordere Ende (2a) des Schlauchs um den rohrförmigen Ansatz (3) des Verbinders (1) geführt wird, bis das vordere Ende (2) die radialen Haltevorsprünge (31) und mindestens einen Abschnitt des Klemmbereichs (30) umfangmäßig umgibt, so dass mit dem Crimpbund (5), der den temporären Aufnahmeraum (4) umfangmäßig umgibt, das vordere Ende des Schlauchs einen ersten Außendurchmesser D1 an der Stelle des Klemmbereichs (30) und einen zweiten Außendurchmesser D2 an der Stelle der radialen Haltevorsprünge (31) aufweist, wobei der erste Außendurchmesser D1 kleiner als der zweite Außendurchmesser D2 ist, wobei der erste Außendurchmesser D1 und der Durchmesser des maximalen radialen Platzbedarfs D3 kleiner oder gleich dem Innendurchmesser D0 sind und der zweite Außendurchmesser D2 größer oder gleich dem Innendurchmesser D0 ist,

- der Bund oder der Verbinder danach derart bewegt wird, dass der Bund (5) den temporären Aufnahmeraum (4) verlässt und der Crimpbund (5) um mindestens einen Abschnitt des vorderen Endes (2a) des Schlauchs und im Wesentlichen dem Klemmbereich (30) des Verbinders zugewandt positioniert wird, und

- der Bund (5) gecrimpt wird, um das offene vordere Ende (2a) des Schlauchs (2) am Verbinder (1) zu befestigen.

wobei der temporäre Aufnahmeraum (4) vom Klemmbereich (30) durch ein Trennmittel getrennt ist, das aus einem axialen Anschlagabsatz (32) des Schlauchs oder einem Kragen (40) ausgewählt ist.

2. Verfahren nach Anspruch 1, wobei

- der Bund (5) mit Hilfe einer Backe um den Verbinder (10) geführt wird,
- die Backe den Bund im Wesentlichen koaxial mit dem temporären Aufnahmeraum (4) des Verbinders hält, während das vordere Ende (2) des Schlauchs auf den rohrförmigen Ansatz (3) geführt wird, und
- der Bund oder der Verbinder derart verlagert wird, dass der Bund um mindestens einen Abschnitt des vorderen Endes (2a) des Schlauchs und im Wesentlichen dem Klemmbereich (30) des Verbinders zugewandt mittels der Backe positioniert wird.

3. Verfahren nach Anspruch 2, wobei der Bund (5) ein metallischer Schrumpfbund, insbesondere ein Ohrlosbund, ist.

**Claims**

1. A method for fixing a flexible hose (2) in a sealed manner to a connector (1) using a crimping collar (5), wherein:

- the following is provided:

a. a flexible hose (2) with an open front end (2a),
b. a connector (1) including

i. a connector body (10),
ii. a tubular nozzle (3) able to receive the front end of the hose, the tubular nozzle including retaining radial projections (31) of the hose as well as a clamping area (30) of the hose, and
iii. a temporary accommodation space (4) axially interposed between the tubular nozzle (3) and the connector body (10) and having a maximum radial size of diameter D3, the temporary accommodation space (4) and the clamping are (30) being separated from each other on the connector (1), and

c. a crimping collar (5) for fixing the front end of the flexible hose to the connector, the collar at rest prior to crimping having an inner diameter D0,

- the collar (5) is engaged around the connector (1) by the tubular nozzle (3) until the collar circumferentially surrounds at least partially the temporary accommodation space (4),
- the front end (2a) of the hose is engaged around the tubular nozzle (3) of the connector (1) until said front end (2) circumferentially surrounds the retaining radial projections (31) and at least part of the clamping area (30), so that with the crimping collar (5) circumferentially surrounding the temporary accommodation space (4), the front end of the hose has a first outer diameter D1 at the location of the clamping area (30) and a second outer diameter D2 at the location of the retaining radial projections (31), the first outer diameter D1 being smaller than the second outer diameter D2, the first outer diameter D1 and the diameter D3 of the maximum radial size being smaller than or equal to the inner diameter D0, and the second outer diameter D2 being larger than or equal to the inner diameter D0,
- the collar or the connector is moved in order to leave the temporary accommodation space (4) with regard to the collar (5) and position the crimping collar (5) around at least part of the front end (2a) of the hose and substantially opposite the clamping area (30) of the connector, and
- the collar (5) is crimped for fixing the open front end (2a) of the flexible hose (2) to the connector (1),

knowing that the temporary accommodation space (4) and the clamping area (30) are separated by a separating means chosen among an abutting axial shoulder (32) of the hose or a collar (40).

2. The method according to claim 1, wherein

- the collar (5) is engaged around the connector (10) by means of a jaw,
- the jaw maintains the collar substantially coaxial with the temporary accommodation space (4) of the connector while the front end (2) of the hose is being engaged on the tubular nozzle (3), and
- the collar or the connector is moved in order to position the collar around at least part of the front end (2a) of the hose and substantially opposite the clamping area (30) of the connector by means of the jaw.

3. The method according to claim 2, wherein the collar (5) is a multi-crimp metallic collar, specifically a collar without lugs.

**FIG. 1**

**FIG. 2**

**FIG. 3**

**FIG. 4**

**FIG. 5**

**FIG. 6**

FIG. 7

FIG. 8

FIG. 9

**FIG. 10**

**EP 3 164 634 B1**